# EUROPEAN PATENT APPLICATION

(11) **EP 4 712 208 A1**
(43) Date of publication of application: **18.03.2026**
(21) Application number: 24807452.8
(22) Date of filing: 10.05.2024
(51) Int. Cl.: H01M 10/54, C22B 3/04, C22B 3/42, C22B 3/26, C22B 26/12, C01B 32/215, C01B 32/20, C01G 51/06, C01G 53/00

(54) **METHOD FOR RECOVERING BATTERY MATERIAL FROM USED BATTERY**

(30) Priority: 12.05.2023 KR 20230061837; 14.07.2023 KR 20230092075; 16.01.2024 KR 20240006731
(71) Applicant: Easymining Co., Ltd., Ulsan 44919 (KR); Ulsan National Institute of Science and Technology (UNIST), Eonyang-eup Ulju-gun Ulsan 44919 (KR)
(72) Inventor: SON, Hee Won, Ulsan 44532 (KR); KIM, Young Sik, Ulju-gun, Ulsan 44919 (KR); KIM, Ha Eun, Ulju-gun, Ulsan 44919 (KR); HONG, Seung Yeon, Ulju-gun, Ulsan 44919 (KR); KIM, Wol Young, Daegu 41074 (KR); SON, Hee Cheol, Ulju-gun, Ulsan 44983 (KR)
(74) Representative: dompatent
(86) International application number: PCT/KR2024/006326
(87) International publication number: WO 2024/237577

(57) **Abstract**

The present invention relates to recycling of used batteries, and more specifically, to a method for recovering main materials in used batteries through chemical discharge.

## Description

### [Technical Field]

The present invention relates to recycling of a used battery, and more specifically, to a method for recovering main materials in a used battery through chemical discharge.

### [Background Art]

In line with global greenhouse gas reduction policies, the electric vehicle (EV) industry is rapidly developing, and in line with the significant increase in the use of energy storage systems (ESSs) linked to renewable energy, demand for lithium-ion batteries (LIBs) is growing significantly. In the case of these LIBs, these are usually disposed of after about 10 years of use as their capacity is decreased, and it is expected that the amount of used lithium ion batteries, that is, used batteries will be increased rapidly in the future.

Accordingly, with growing interest in the treatment and recycling of used batteries, various studies have been conducted on reuse of used batteries and lithium extraction or recovery technologies therefrom. Existing recycling processes for used batteries can be broadly categorized into dry and wet processes. The dry processes involve placing used batteries entirely into an electric furnace, without crushing or sorting, and dissolving and separating valuable metals like cobalt and nickel, while discharging other metals containing lithium as slag. In these high-temperature dry processes, lithium is lost through volatilization or remains in the slag, and there are many difficulties in recovering this lithium, thereby resulting in high processing costs.

In wet processes, positive electrode material from used batteries is crushed and sorted, lithium is leached into a solution, valuable metals are separated in a solution state through solvent extraction, and lithium is then produced as a metal or compound through processes such as electrowinning or crystallization process. However, the wet process itself is complex and expensive, and may cause environmental problems by using hazardous compounds such as acid or alkaline solutions to leach lithium.

Meanwhile, a technology for recovering valuable metals from used batteries without using hazardous compounds such as acid solutions has been devised (Patent Document 0001). Specifically, the electrode recovered from spent lithium-ion batteries is heat-treated at 180 to 450 degrees to decompose and remove the binder, and then the separated electrode active material is obtained, and valuable metals are recovered through an electrolytic method (capacitive de-ionization (CDI) method) in an aqueous solution. However, in order to recover the electrode active material from the used battery, a separate heat treatment process is required to decompose and remove the binder in the used battery, which incurs additional costs, and there is a problem that valuable metals including lithium contained in the positive electrode active material may be lost due to the high-temperature heat treatment.

### [Patent Document]

(Patent Document 1) Korean Patent No. 10-2403455

### [Disclosure]

### [Technical Problem ]

It is an object of the present invention to recover main materials from used batteries with high efficiency, fast process, and low cost.

The objects of the present invention are not limited to the objects mentioned above, and other objects not mentioned can be clearly understood from the description below.

### [Technical Solution ]

The method for recovering battery materials according to one embodiment of the present invention comprises the steps of 1) charging a used battery; 2) inducing chemical discharge by disassembling the external pouch of the charged used battery in a solution; 3) separating the negative electrode substrate and separator from the solution after the chemical discharge is completed; and 4) recovering battery materials from the solution.

The used battery may be charged to a SOC (State of Charge) of 50 or higher.

The solution may be one that dissolves lithium in the charged negative electrode, and the solution may use water as a solvent or may be an LeS (lithium-extraction solution).

The chemical discharge may be to supply the solution to the interior of the used battery and then induce a spontaneous reaction of the solution with lithium in the negative electrode.

The LeS may comprise water, a solvent that reacts with the charged negative electrode material to release lithium ions into the solution, and an anti-solvent that crystallizes lithium ions in solution into lithium compounds due to a low solubility of the lithium compounds (lithium hydroxide anhydrate, lithium hydroxide monohydrate, lithium carbonate, etc.).

The anti-solvent may comprise at least one selected from the group consisting of methanol, ethanol, 2-propanol (isopropyl alcohol) (IPA), acetone, N-methyl-2-pyrrolidone (NMP), dimethyl sulfoxide (DMSO), ethylene glycol, propylene glycol, methyl acetate, ethyl acetate, pentane and heptane.

The battery materials recovered from the solution may be any one of graphite, lithium (Li), copper foil, separator, and positive electrode material.

The lithium (Li) may be in the form of a lithium compound, and the lithium compound may be Li₂CO₃, LiOH or LiOH·H₂O.

The lithium compound recovered from the solution may be recovered by adding an alcohol-containing solvent to the aqueous solution of lithium.

### [Advantageous Effects ]

The present invention has the effect of recovering main materials from a used battery at low cost and high efficiency through a simple four-step process and recycling them as a raw material for batteries.

In addition, the present invention has the effect of recovering lithium with low energy consumption and in an environmentally friendly manner in first recovering lithium (Li) from a used battery.

The technical effects of the present invention are not limited to those mentioned above, and other technical effects not mentioned will be clearly understood by those skilled in the art from the description below.

### [Description of Drawings]

FIG. 1 shows a process flow chart of a method for recovering battery materials according to one embodiment of the present invention.
FIG. 2 shows a schematic diagram illustrating chemical discharge of a used battery during immersion in a solution in a method for recovering battery materials according to one embodiment of the present invention.
FIG. 3 shows a schematic diagram illustrating a process of a method for recovering battery materials according to one embodiment of the present invention.
FIG. 4 shows the results of ICP-OES analysis of a solution recovered through a method for recovering battery materials according to one embodiment of the present invention.
FIG. 5 shows the results of FT-IR spectroscopic analysis of materials recovered through a method for recovering battery materials according to one embodiment of the present invention.
FIG. 6 shows the results of ICP-OES analysis of the negative electrode recovered through a method for recovering battery materials according to one embodiment of the present invention.
FIG. 7 shows the results of XRD analysis of the Li powder recovered through a method for recovering battery materials according to one embodiment of the present invention.
FIG. 8 shows the results of XRD analysis of the negative electrode material recovered through a method for recovering battery materials according to one embodiment of the present invention.
FIG. 9 shows an SEM image of the negative electrode material recovered through a method for recovering battery materials according to one embodiment of the present invention.
FIG. 10 shows a schematic diagram illustrating processes for a method for recovering battery materials according to one embodiment of the present invention.
FIG. 11 is a photographic image showing a state in which the outer case of a 60 Ah battery is disassembled in an aqueous solution according to one embodiment of the present invention.
FIG. 12 shows the results of XRD analysis of Li powder recovered through a method for recovering battery materials according to one embodiment of the present invention.
FIG. 13 shows the results of XRD analysis of the negative electrode material and positive electrode (positive electrode material + positive electrode substrate) recovered through a method for recovering battery materials according to one embodiment of the present invention.
FIG. 14 is a schematic diagram illustrating processes for a method for recovering battery materials according to another embodiment of the present invention.

### [Best Mode]

Hereinafter, embodiments of the present invention will be described in detail so that a person with ordinary knowledge in the technical field to which the present invention pertains can easily practice the present invention. However, the present invention may be implemented in various different forms and is not limited to the embodiments described herein. Also, throughout the specification, like reference numbers represent like elements.

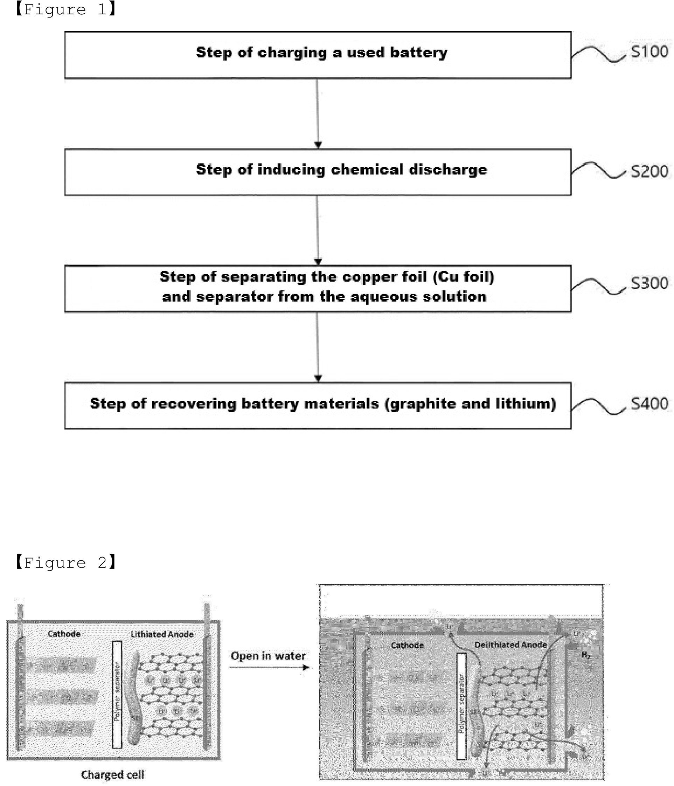

FIG. 1 shows a process flow chart of a method for recovering battery materials according to one embodiment of the present invention.

Referring to FIG. 1, the method for recovering battery materials according to one embodiment of the present invention comprises the steps of 1) charging a used battery (S100); 2) inducing chemical discharge by disassembling the external pouch of the charged used battery in a solution (S200); 3) separating the negative electrode substrate and separator from the solution after the chemical discharge is completed (S300); and 4) recovering battery materials from the solution (S400).

Step S100 is intended to charge the used battery, thereby moving lithium ions present within the positive electrode to the negative electrode, and thus inducing a spontaneous reaction in which lithium ions dissolve by reacting the thermodynamically unstable charged negative electrode with a solution. Through this, the structure of the positive electrode may be weakened as lithium ions present within the positive electrode are removed. The charging may be performed within the solution described below or may be pre-charged outside the solution.

In step S100, the charging may be performed such that the SOC (State of Charge) is preferably 50 or more, 60 or more, 70 or more, 80 or more, 90 or more, or may be in an overcharge state.

In this case, the charging rate may be C-rate 3 or lower.

In step S100, the used battery may be configured such that the negative electrode is composed of graphite (C₆) as a negative electrode material and copper foil (Cu foil) as a negative electrode substrate, and configured such that the positive electrode is composed of a lithium transition metal oxide as a positive electrode material and aluminum foil (Al foil) as a positive electrode substrate.

In step S100, the charged negative electrode of the used battery may be LiC₆.

For safety, step S100 may be performed to charge the used battery while immersed in a solution wherein the solution may be a solution with a high specific heat and no volatility. The solution is intended to prevent fires that may occur from the used battery by blocking oxygen and heat. As an example, the solution may be a substance with a high specific heat, such as water or oil.

FIG. 2 is a schematic diagram illustrating the chemical discharge of S200. Referring to FIG. 2, step S200 may be for inducing chemical discharge while the charged used battery is immersed in a solution. The chemical discharge may be performed by disassembling the external pouch of the used battery to supply the solution to the interior of the used battery, and more specifically, the solution may be introduced to the interior of the used battery and react with the charged negative electrode. The solution spontaneously reacts with the thermodynamically unstable charged negative electrode when the solution comes into contact with it, thereby inducing a chemical discharge that releases lithium. The reaction time for the chemical discharge can range from 10 minutes to 24 hours, depending on the extent of disassembly of the external pouch.

In step S200, the solution may react with LiC₆, which is a charged negative electrode, to dissolve lithium into a solution phase, and the solution may be water, an aqueous solution in which Li is dissolved, or a LeS (lithium-extraction solution).

The solution may be supplied into the charged battery so that lithium in the negative electrode is dissolved in the solution in the form of lithium ions and exists as a lithium solution. The lithium in the negative electrode may be lithium (or lithium ions) existing in the layered structure of the negative electrode or lithium (or lithium ions) that constitutes the negative electrode SEI (solid electrolyte interphase) layer and dendrite. More specifically, the solution is supplied into the charged battery so that the negative electrode material is peeled off from the negative electrode current collector (e.g., Cu foil), which is the negative electrode substrate, due to a strong exothermic reaction between the lithium (or lithium ions) in the negative electrode and the solution.

The LeS may comprise water, which is a solvent that reacts with the charged negative electrode material to release lithium ions into the solution, and an anti-solvent that crystallizes the lithium ions in the solution into lithium compounds due to low solubility of lithium compounds (lithium hydroxide anhydrate, lithium hydroxide monohydrate, lithium carbonate, etc.)

Pure water has a high solubility to Li, allowing for the accumulation of high concentrations of lithium during solution recycling or multiple cell processing. This can lead to increased Li loss as Li is inserted into the lattice of the positive electrode material. However, when the LeS is used as a solution for the chemical discharge, as in the present invention, Li ions can easily precipitate in the form of LiOH, thereby lowering the Li concentration in the solution. Therefore, in the case of the present invention, since the insertion of Li into the positive electrode material can be suppressed, the recovery rate of lithium can ultimately be increased.

In addition, pure water has a high solubility to lithium. Therefore, when a high-concentration Li aqueous solution is generated, since metals (Al, Cu, etc.) within the solution corrode within a short period of time due to the resulting high pH (e.g., pH 14 or higher for a 4 M LiOH aqueous solution), there are problems that the purity of the overall recovered material (positive electrode material, negative electrode material, current collector, etc.) comprising lithium compounds is reduced, and additional processes are required to remove impurities from the recovered lithium compounds.

However, when the LeS is used as a solution for chemical discharge, as in the present invention, Li ions precipitate in the form of LiOH, thereby reducing the -OH ions in the solution and lowering the final pH, and thus it has the effect of inhibiting metal corrosion, reducing impurities, and increasing the purity of the overall recovered material.

In addition, when processing a large number of cells, it can overcome operational difficulties and worker safety issues due to high pH and violent reactions, thereby enhancing commercialization.

Accordingly, the pH of the LeS in steps 2) to 4) above can be maintained at pH 13 or lower even without including a separate pH adjusting agent, and preferably can have a pH value of 7 to 13.

In order to achieve this effect, the anti-solvent included in the LeS of the present invention may comprise at least one selected from the group consisting of methanol, ethanol, 2-propanol (isopropyl alcohol) (IPA), acetone, N-methyl-2-pyrrolidone (NMP), dimethyl sulfoxide (DMSO), ethylene glycol, propylene glycol, methyl acetate, ethyl acetate, pentane and heptane.

The anti-solvent and the water contained in the LeS can be mixed in a volume ratio of 7:1 to 1:7, preferably in a volume ratio of 5:1 to 1:5, and more preferably in a volume ratio of 3:1 to 1:3.

The LeS may be supplied into the charged battery to dissolve lithium in the negative electrode, and at the same time, precipitate lithium as a salt with the effect of an anti-solvent.

The step 3) (S300) may be to separate the solution, copper foil (Cu foil), and separator, respectively, after completing the chemical discharge.

The step 4) (S400) may recover battery materials from the solution, and more specifically, for safety, the battery materials are separated within 10 minutes to 24 hours after the end of the chemical discharge, and the recovered battery materials may be any one of graphite, lithium (Li), and positive electrode materials. More specifically, the solution may be subjected to vacuum filtration to primarily recover graphite, and then the solution may be dried to secondary recover lithium (Li). In this case, an insoluble solvent may be added to the solution.

In step 4) (S400) above, the recovered lithium (Li) may be in the form of a lithium compound, and the lithium compound may be at least one lithium compound selected from the group consisting of Li₂CO₃, LiOH and LiOH·H₂O.

If the lithium compound is Li₂CO₃, the lithium may be dried and recovered by adding carbon dioxide gas or a carbonate-based precipitant to the solution, and the carbon dioxide gas may be CO or CO₂, and the carbonate-based precipitant may be at least one selected from the group consisting of sodium carbonate (Na₂CO₃), sodium bicarbonate (NaHCO₃), potassium carbonate (K₂CO₃), potassium bicarbonate (KHCO₃), calcium carbonate (CaCO₃), magnesium carbonate (MgCO₃), barium carbonate (BaCO₃) and dolomite (CaMg(CO₃)₂). In addition, the lithium may be recovered by adding an insoluble solvent to the solution to precipitate the lithium, filtering and separating the lithium. The insoluble solvent may be an alcohol series such as isopropyl alcohol, which has a solubility of 0 to Li₂CO₃. It may be preferable to mix the solution and the insoluble solvent so that the volume ratio is 1:1 to 1:9, and the precipitated lithium compound, Li₂CO₃, may be filtered (e.g., using a Buchner funnel) and then dried.

If the lithium compoundis LiOH, the lithium may be recovered by precipitating LiOH using a hydroxide-based precipitant or an insoluble solvent in the solution, filtering, and separating. The hydroxide-based precipitant may be Ca(OH)₂. The insoluble solvent may have a solubility of 0 to LiOH, and more specifically, may be isopropyl alcohol. In addition, it may be preferable to mix the solution and the insoluble solvent so that the volume ratio is 1:1 to 1:9, and the precipitated lithium compound, LiOH slurry, may be filtered (e.g., using a Buchner funnel). In addition, in order to prevent CO₂ and LiOH in the atmosphere from reacting to form a Li₂CO₃ phase, it is preferable to carry out the precipitation, filtration, and separation processes in an inert gas atmosphere or vacuum. The inert gas may be argon (Ar) or nitrogen (N₂).

Therefore, in step 4) (S400) above, the lithium compound recovered from the solution may be recovered by adding an alcohol-containing solvent such as isopropyl alcohol to the aqueous lithium solution.

In addition, in step 4) (S400) above, the positive electrode material recovered from the solution may be a positive electrode material and a positive electrode substrate. As an example, the positive electrode material may be a lithium transition metal oxide, and the lithium transition metal oxide may be selected from the group consisting of LiCoO₂, LiNiO₂, Li[Ni,Co,Mn]O₂, Li[Ni,Co,Al]O₂, LiMn₂O₄ and LiFePO₄. The positive electrode substrate may be an aluminum foil (Al foil).

The method for recovering battery materials according to one embodiment of the present invention may consume minimal energy when recovering lithium. As an example, assuming the conditions in Table 1 below, 1.7 kWh of energy can be consumed per 1 kg of recovered lithium.

**[Table 1]**

| **Item** | **Calculated value** |
|---|---|
| Power consumption when charging at 1 Ah, 4.8 V | 4.8 Wh |
| Content of lithium in 1 Ah battery | 0.46 g |
| Mole of lithium recovered | 0.46 g/6.941 g·mol⁻¹(lithium molecular weight) = 0.067 mol |
| Converted mass of recoverable lithium compound (LiOH·H₂O) | 0.067 mol x 42 g/mol(LiOH·H₂O molecular weight) = 2.81g |
| Amount of energy consumed for recovery of lithium | 4.8 Wh / 2.81 g = 1.7 kWh/kg |

Hereinafter, the present invention will be described in detail through examples.

### Example 1. Recycling experiment using a used battery with 1 Ah capacity

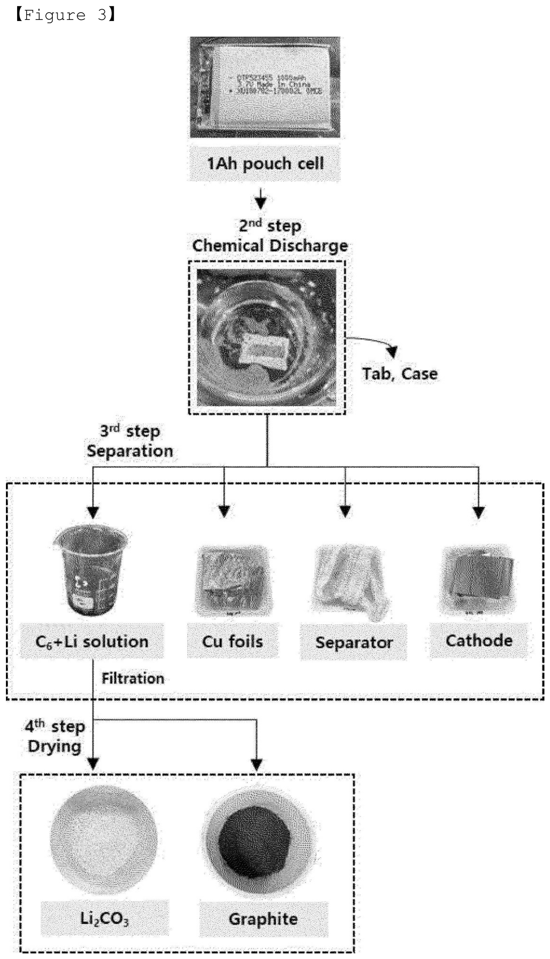

FIG. 3 is a schematic diagram illustrating the processes of a method for recovering battery materials from a 1 Ah-capacity used battery.

Referring to FIGS. 1 to 3, as a used battery, as shown in Table 2 below, a 1 Ah pouch-type used battery (total weight of the used battery: 17.2 g) with a positive electrode composed of LiNi_{0.5}Co_{0.2}Mn_{0.3}O₂ (NCM523) , a negative electrode composed of graphite, and an electrolyte composed of LiPF₆ was prepared. The prepared used battery has the Li content as shown in Table 3 below. The used battery is charged to an SOC of 100 at 1 C for 1 hour to move lithium into the layered structure of the negative electrode. The external pouch is first removed to chemically discharge the used battery while it is placed in a water tank filled with 155 mL of water (aqueous solution) ("Chemical Discharge" in FIG. 3). After the chemical discharge of the used battery is completed, the aqueous solution in the water tank (black solution = lithium aqueous solution + graphite), the copper foil (Cu foil) of the negative electrode of the used battery, and the positive electrode (cathode) are recovered ("Separation" in FIG. 3).

The recovered aqueous solution was a black solution, and the black solution was filtered under reduced pressure to recover graphite, and the solution (LiOH solution) from which the graphite, which is a negative electrode material, was separated was mixed with isopropyl alcohol in a volume ratio of 3:1, and the settled precipitate was filtered using a Buchner funnel, and then dried in the air to recover Li powder (Li₂CO₃) ("Drying" in FIG. 3).

**[Table 2]**

| **Item** | **Chemical composition** | **Weight (%)** | **Weight (g)** |
|---|---|---|---|
| Positive electrode active material (positive electrode material) | Lithium Nickel Manganese Cobalt Oxide (LiNi_{0.5}Co_{0.2}Mn_{0.3}O₂) | 35 | 6.02 |
| Negative electrode active material (negative electrode material) | Graphite (C₆) | 20 | 3.44 |
| Negative electrode substrate | Copper | 10 | 1.72 |
| Positive electrode substrate | Aluminum | 5 | 0.86 |
| Electrolyte | Ethylene carbonate | 15 | 2.58 |
| | Carbonate methyl ethyl | 5 | 0.86 |
| | LiPF₆(salt) | 5 | 0.86 |
| Separator | - | 5 | 0.86 |

**[Table 3]**

| **Item** | **Li (g)** | **Li (mol)** | **Li (wt%)** |
|---|---|---|---|
| **Positive electrode** | 0.43 g | 0.062 mol | 2.52 wt% |
| **Electrolyte** | 0.04 g | 0.005 mol | 0.2 wt% |
| **Total** | 0.47 g | 0.067 mol | 2.72 wt% |

### Example 2. Application of 1 Ah Used Battery

The used battery was discharged in the same manner as in Example 1, except that the used battery was charged at 1 C to a SOC of 60 to move lithium into the layered structure of the negative electrode.

### Example 3. Application of 1 Ah Used Battery

The used battery was discharged in the same manner as in Example 1, except that the used battery was charged at 1 C to a SOC of 50 to move lithium into the layered structure of the negative electrode.

### Comparative Example 2. Recovery of battery materials using conventional technology

Battery materials were recovered from 1 Ah used battery using conventional techniques.

Specifically, the method used consists of two stages: a pre-treatment process that converts the battery to a form that is easy to extract resources after discharging it to 0% SOC, and a post-treatment process that extracts the resources. The pre-treatment process refers to the process of discharging, disassembling, and crushing or pulverizing the used batteries to prepare the Black powder, and the post-treatment process refers to the process of subjecting the black powder to high-temperature heat treatment (>700°C) or acid treatment to recover the valuable metals. As a result of using this method, a high energy consumption of 32 kWh/kg was caused, and environmental pollution was caused by the generation of a large amount of CO₂, harmful gases, and waste liquid.

### Experimental Example 1. Analysis of Li content

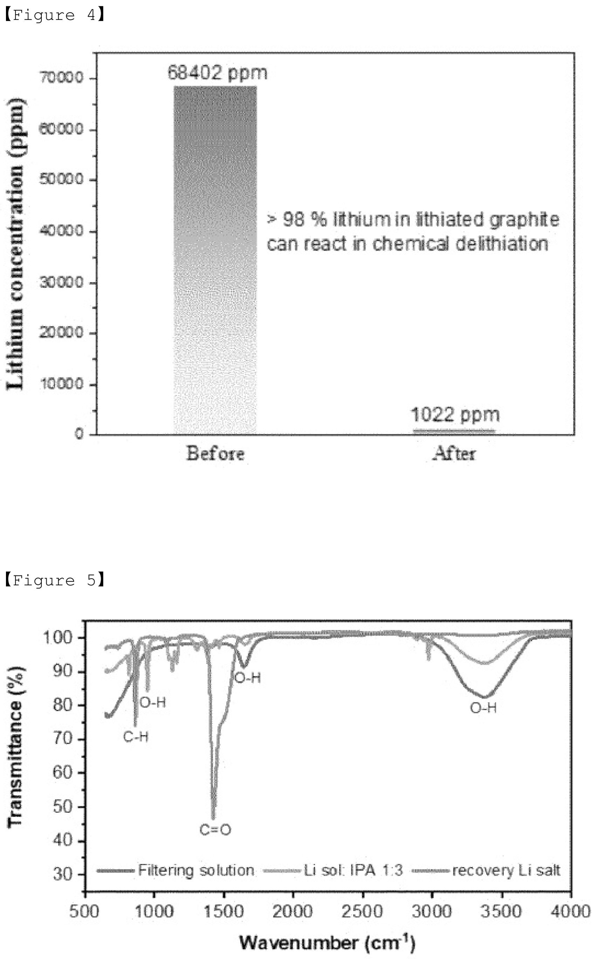

The outer case of the used battery, charged to a SOC of 100 in Example 1 above, was disassembled in a solution, and then ICP-OES (Inductively Coupled Plasma Optical Emission spectroscopy) analysis was performed on the graphite within the negative electrode before reaction with water (chemical discharge) (Before) and after reaction with water (After), to confirm the amount of lithium (Li) in the graphite, and the results are shown in FIG. 4.

Referring to FIG. 4, it can be confirmed that the amount of Li in the negative electrode is 68402 ppm when charged to SOC 100, and the amount of Li in the negative electrode after chemical discharge is 1022 ppm, meaning that more than 98% of the Li in the negative electrode is dissolved into the aqueous solution. It can be confirmed that more than 98% of the lithium (Li) present in the negative electrode (graphite) was dissolved through reaction with water.

### Experimental Example 2. Analysis of Li recovery

The results of an infrared spectroscopy (FT-IR) analysis on a filtered solution obtained by filtering the solution (black solution) in the tank after complete discharge of the used battery in Example 1 above, a mixed solution (Li sol:IPA 1:3) obtained by mixing the filtered solution and isopropyl alcohol in a 1:3 volume ratio, and a powder-type precipitate (recovery Li salt) recovered by vacuum filtration after allowing the mixture to stand for 30 minutes (min) to confirm precipitation are shown in FIG. 5.

Referring to FIG. 5, it can be confirmed that the filtered solution exists in the form of a LiOH aqueous solution as evidenced by the high peak of the O-H group. In addition, it can be confirmed that it is a process of conversion into Li₂CO₃ through the reduction of O-H groups and the creation of new C-H bond groups in the mixed solution (Li sol:IPA 1:3). Finally, it can be confirmed that the precipitate (recovery Li salt) exists in the Li₂CO₃ phase as C=O and C-H bond groups are strongly observed.

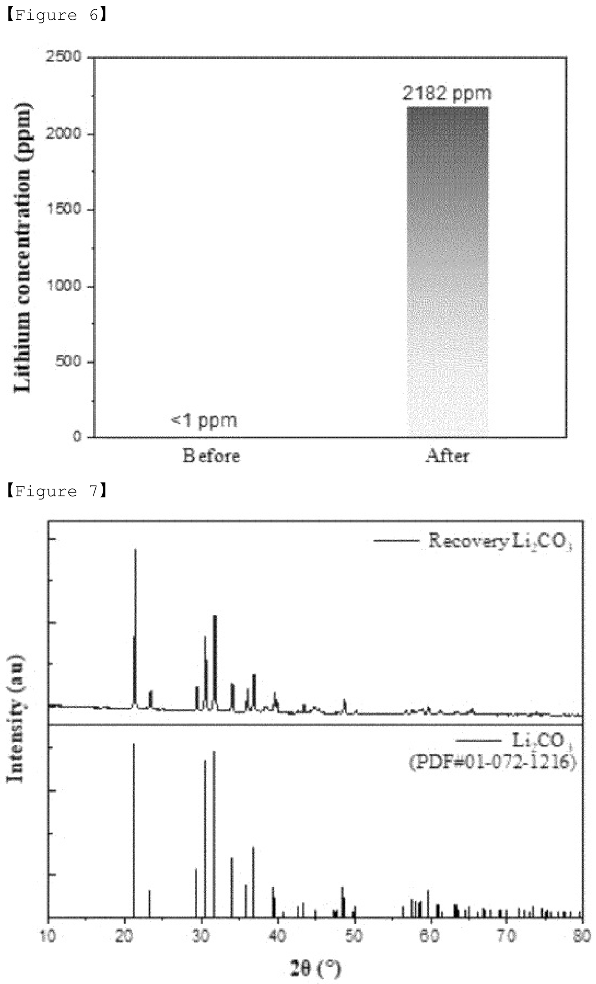

In addition, the amount of lithium in the aqueous solution was confirmed by disassembling the used battery charged to SOC 100 in Example 1 and then performing ICP-OES analysis on the aqueous solution (Before), which had been reacted with water (chemical discharge), and the aqueous solution (After) after chemical discharge, and the results are shown in FIG. 6.

Referring to FIG. 6, also, considering that the amount of the aqueous solution is 155 mL, the concentration of Li in the aqueous solution after chemical discharge is 2182 mg/L (2182 ppm), and thus it can be confirmed that the content of Li in the aqueous solution after chemical discharge is 0.3382 g, which corresponds to approximately 72% of the amount of Li (0.47 g) in a 1 Ah battery.

### Experimental Example 3. Analysis of Li component

An XRD (X-ray Diffraction) analysis was performed on the Li powder recovered in Example 1, and the results of the XRD analysis are shown in FIG. 7.

Referring to FIG. 7, it can be confirmed that it exists in the form of Li₂CO₃ (see "Recovery Li₂CO₃" in FIG. 7).

In addition, ICP analysis was performed on the Li powder recovered in Example 1 above, and the results of the ICP analysis are summarized in Table 4 below.

**[Table 4]**

| | **mg/kg** | **MW** | **MW%** |
|---|---|---|---|
| **Li** | 171558 | 24716.61 | 99.6 |
| **Mg** | 118 | 4.85 | 0.01 |
| **Al** | 837 | 31.02 | 0.125 |
| **Si** | 218 | 15.571 | 0.062 |
| **P** | 923 | 29.799 | 0.12 |
| **Ca** | 482 | 12.06 | 0.048 |
| **K** | 102 | 2.60 | 0.01 |
| **Cu** | 42.4 | 0.66 | 0.002 |
| **Co** | 0.949 | 0.016 | 0 |
| **Fe** | 9.92 | 0.177 | 0.0007 |
| **Mn** | 23.5 | 0.427 | 0.001 |
| **Ni** | 12.2 | 0.20 | 0.001 |

### Experimental Example 4. Analysis of negative electrode material

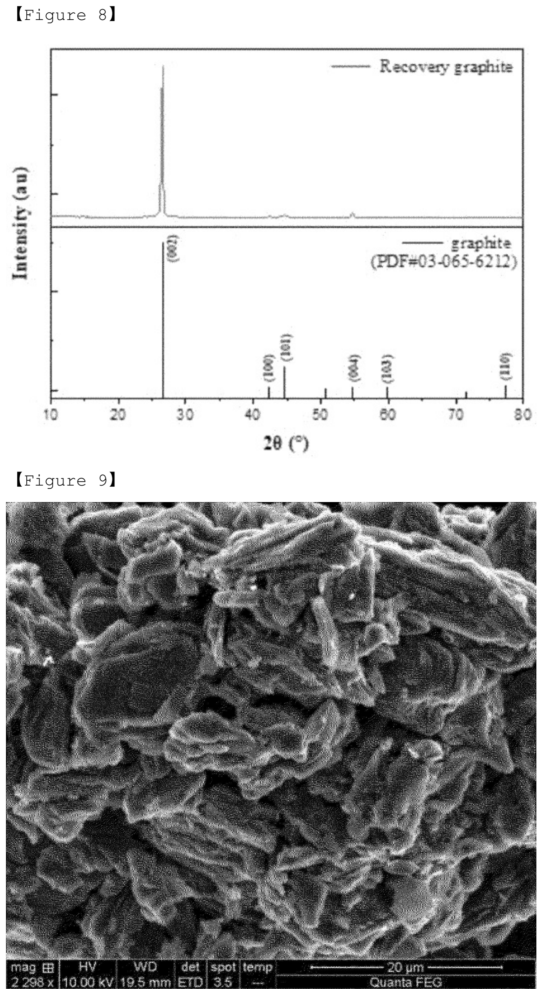

An XRD analysis was performed on graphite, which is the negative electrode material recovered in Example 1 above, and the results of the XRD analysis are shown in FIG. 8.

Referring to FIG. 8, it can be confirmed that the recovered negative electrode material is graphite.

In addition, SEM images of graphite, which is the negative electrode material recovered in Example 1 above, were analyzed, and the SEM images are shown in FIG. 9.

Referring to FIG. 9, it can be confirmed that graphite, which is recovered negative electrode material, has no impurities observed and the layered structure is maintained.

### Experimental Example 5. Analysis of the recovery rate of main materials

The recovery rates of the main materials recovered and separated in Examples 1 and 2 above and Comparative Examples 1 and 2 are summarized in Table 5 below based on Tables 2 and 3 above. The theoretical recovery amount in Table 5 below is calculated from Tables 2 and 3 above. As an example, assuming that all lithium (0.47 g) present in 1 Ah (1,000 mAh) above used battery used in Example 1 was recovered, and converting this to Li₂CO₃, the total recoverable Li₂CO₃ is 2.48 g. In addition, the "actual recovery amount" in Table 5 below is the actual weight measured by drying of each material recovered and separated through the Example 1. Meanwhile, the recovery rate of Li compounds in Table 5 below is calculated based on Li₂CO₃.

**[Table 5]**

| | | **Example 1** | | **Example 2** | | **Example 3** | | **Comparative Example 2** | |
|---|---|---|---|---|---|---|---|---|---|
| Recovered material | Theoreti -cal recovery amount | Actual recovery amount | Recovery rate (%) | Actual recovery amount | Recovery rate (%) | Actual recovery amount | Recovery rate (%) | Actual recovery amount | Recovery rate (%) |
| Li | 2.48g | 1.79g | 72 | 0.775 | 31 | 0.687 | 27.7 | | 65 |
| compound ¹⁾ | | | | | | | | | |
| Graphite²⁾ | 3.44g | 3.44g | 100 | 3.44g | 100 | 3.44g | 100 | | >80 |
| Copper³⁾ | 1.59g | 1.59g | 100 | 1.59g | 100 | 1.59g | 100 | | >80 |
| Positive electrode material⁴⁾ | 8.1g⁵⁾ | 8.01g | 98% | 8.02 | 99% | 8.02 | 99% | | >90 |

| | | | | | | | | | |
|---|---|---|---|---|---|---|---|---|---|
| 1) Li₂CO₃ 2) C₆ (graphite) 3) Cu (Cu foil) 4) LiₓNiCoMnO₂ (0<x<0.5) + Al foil 5) (SOC 100 cathode weight) | | | | | | | | | |

### Example 4. Discharge of used battery

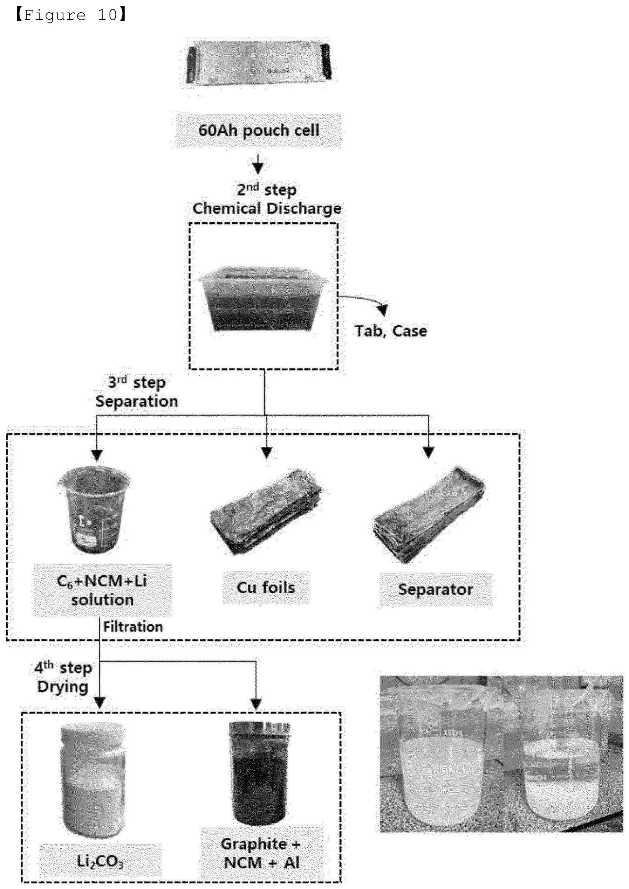

FIG. 10 shows a schematic diagram illustrating the processes of a method for recovering battery materials from a 60 Ah used battery.

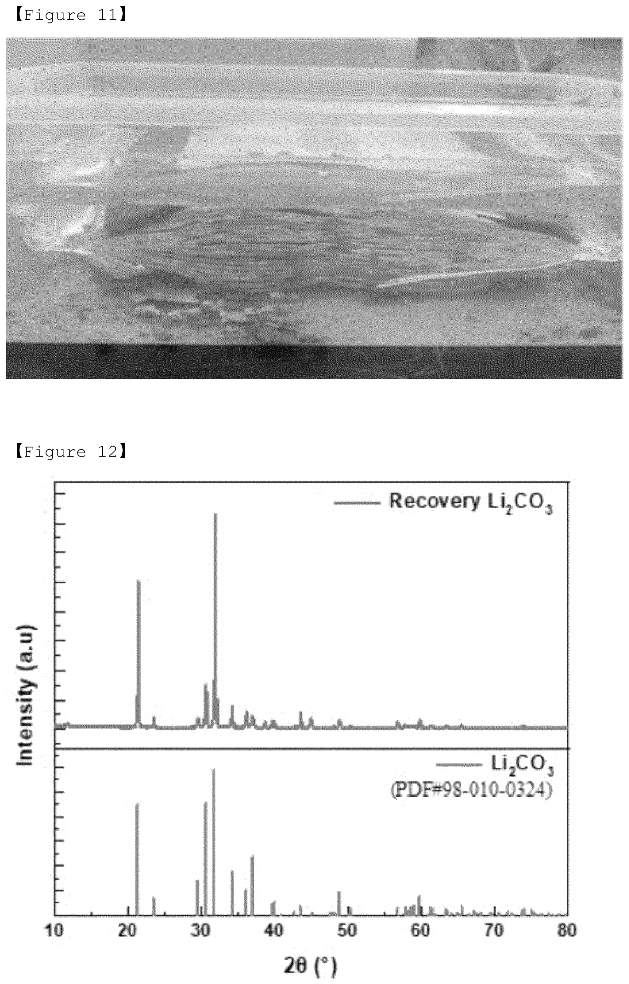

Referring to FIGS. 1, 2, and 10, as the used battery, as shown in Table 6 below, a 60 Ah pouch-type used battery (total weight of the used battery: 872.6 g) with a positive electrode composed of LiNi_{0. 6}Co_{0.2}Mn_{0.3}O₂, a negative electrode composed of graphite, and an electrolyte composed of LiPF₆ was prepared. The prepared used battery has the Li content as shown in Table 6 below. The used battery is charged to an SOC of 100 at 1 C for 1 hour. As shown in FIG. 11, the used battery is chemically discharged by first removing the external pouch while it is placed in a water tank filled with 15 L of water (aqueous solution) ("Chemical Discharge" in FIG. 10).

After the chemical discharge of the used battery is completed, the aqueous solution in the water tank (black solution = LiOH solution + graphite + positive electrode) and the copper foil (Cu foil) of the negative electrode of the used battery are separated ("Separation" in FIG. 10).

The recovered aqueous solution was a black solution. The black solution was filtered under reduced pressure to recover a mixture of graphite and positive electrode (positive electrode material and Al foil), and the filtered solution (LiOH solution) was mixed with isopropyl alcohol in a volume ratio of 3:1 to obtain a precipitate that had settled. The obtained precipitate was filtered using a Buchner funnel and dried in the air to recover Li powder (Li₂CO₃) ("Drying" in FIG. 10).

**[Table 6]**

| **Item** | **Chemical composition** | **Weight (%)** | **Weight (g)** |
|---|---|---|---|
| Positive electrode active material (positive electrode material) | Lithium Nickel Manganese Cobalt Oxide (LiNi_{0.6}CO_{0.2}Mn_{0.3}O₂) | 33 | 286.7 |
| Negative electrode active material (negative electrode material) | Graphite (C₆) | 30 | 261.78 |
| Negative electrode substrate | Copper | 6 | 52.35 |
| Positive electrode substrate | Aluminum | 3 | 26.37 |
| Electrolyte | Ethylene methyl carbonate | 10 | 87.26 |
| | PVDF | 3 | 17.45 |
| | LiPF₆(salt) | 2.3 | 43.63 |
| Separator | - | 5 | 46.63 |
| Outer case | - | 7.7 | 67.19 |

### Experimental Example 6. Analysis of Li component

An XRD (X-ray Diffraction) analysis was performed on the Li powder recovered in Example 4 above, and the results of the XRD analysis are shown in FIG. 12.

Referring to FIG. 12, it can be confirmed that it exists in the form of Li₂CO₃ (see "Recovery Li₂CO₃" in FIG. 12).

### Experimental Example 7. Analysis of negative electrode material and positive electrode (positive electrode material and positive electrode substrate) components

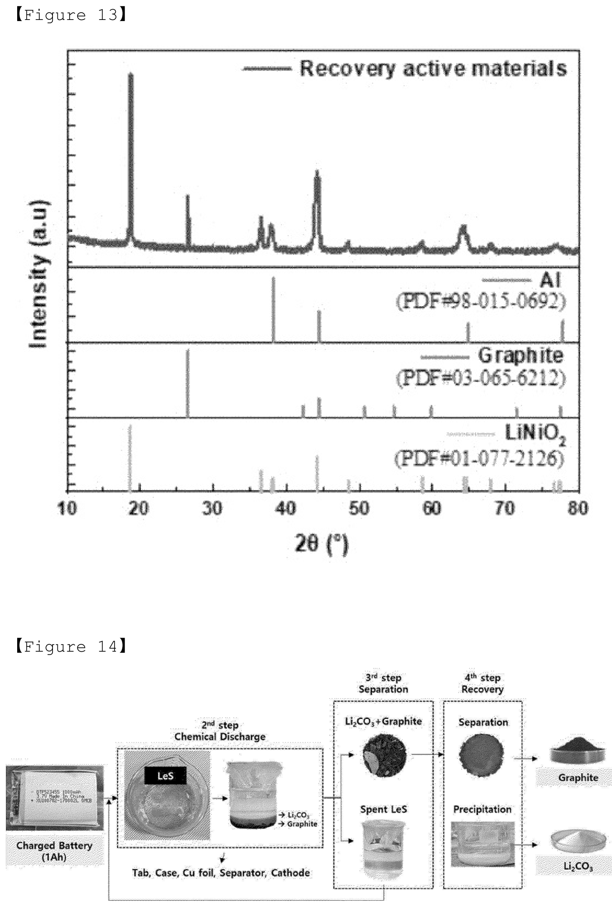

An XRD (X-ray Diffraction) analysis was performed on the negative electrode material and positive electrode (NCM and Al) recovered in Example 4 above, and the results of the XRD analysis are shown in FIG. 13.

Referring to FIG. 13, it can be confirmed that graphite, which is the negative electrode material, was recovered, aluminum (Al), which is the positive electrode substrate in the positive electrode, was recovered, and LiNiO₂ recovered from NCM, which is the positive electrode material in the positive electrode, was recovered.

### Experimental Example 7. Analysis of recovery rates for main materials

The recovery rate for the main materials recovered and separated in Example 4 above, based on Table 6 above, is summarized in Table 7 below.

**[Table 7]**

| **Recovered material** | **Composition** | **Theoretical recovery amount (g)** | **Actual recovery amount (g)** | **Recovery rate (%)** |
|---|---|---|---|---|
| Li compounds | Li₂CO₃ | 109.7 | 85.4 | 77.8 |
| Copper | Cu(Cu foil) | 52 | 52 | 100 |
| Electrode powder | C₆ (graphite) +LiₓNiCoMnO₂ (0<x<0.6)+ Aluminum foil | 642 | 640 | 99.8 |

### Example 5. Application of 1 Ah used battery

Instead of an aqueous solution, LeS was used as a solution, and LeS was prepared by mixing isopropyl alcohol (anti-solvent) and H₂O (solvent) in a volume ratio of isopropyl alcohol:H₂O = 3:1 and stirring at 300 rpm for 30 minutes. As in Example 1, a 1Ah cell charged to 100% SOC was immersed in the LeS solution, and then the outer case was disassembled. Unlike Example 1 using an aqueous solution, the above LiC₆ and LeS reacted and precipitated in the form of a Li compound and settled. Therefore, during the separation process, the precipitate formed by mixing the LeS solution, Li compound, and graphite was recovered through vacuum filtration, and the precipitate was immersed in water to dissolve the Li compound, and then separated from the graphite through vacuum filtration. The Li aqueous solution was mixed with isopropyl alcohol in a volume ratio of 1:7, and the settled Li precipitate was filtered using a Buchner funnel, and then dried in the air to recover Li powder (Li₂CO₃) (see "Drying" in FIG. 14).

The recovery rates for the main materials recovered and separated in Example 5 above, based on Table 2 above, are summarized in Tables 8 and 9 below.

### Example 6. Application of 1 Ah used battery

A LeS was prepared in the same manner as in Example 5, except that an aqueous solution was prepared in a volume ratio of isopropyl alcohol (anti-solvent): H₂O (solvent) = 1:1. The recovery rates for the main materials recovered and separated in Example 6 are summarized in Tables 8 and 9 below.

### Example 7. Application of 1 Ah used battery

A LeS was prepared in the same manner as in Example 5, except that an aqueous solution was prepared in a volume ratio of isopropyl alcohol (anti-solvent): H₂O (solvent) = 5:1. The recovery rates for the main materials recovered and separated in Example 7 are summarized in Tables 8 and 9 below.

### Example 8. Application of 1 Ah used battery

A LeS was prepared in the same manner as in Example 5, except that an aqueous solution was prepared in a volume ratio of acetone (anti-solvent): H₂O (solvent) = 1:1. The recovery rates for the main materials recovered and separated in Example 8 are summarized in Tables 8 and 9 below.

### Example 9. Application of 1 Ah used battery

A LeS was prepared in the same manner as in Example 5, except that an aqueous solution was prepared in a volume ratio of methanol (anti-solvent): H₂O (solvent) = 1:1. The recovery rates for the main materials recovered and separated in Example 9 are summarized in Tables 8 and 9 below.

### Example 10. Application of 1 Ah used battery

A LeS was prepared in the same manner as in Example 5, except that an aqueous solution was prepared in a volume ratio of ethanol (anti-solvent): H₂O (solvent) = 1:1. The recovery rates for the main materials recovered and separated in Example 10 are summarized in Tables 8 and 9 below.

**[Table 8]**

| | Copper (Cu) | | Positive electrode material (Ni_{0.5}Co_{0.2}Mn_{0.3}O₂) | |
|---|---|---|---|---|
| | Weight (g) | Recovery rate (%) | Weight (g) | Recovery rate (%) |
| Example 5 | 1.2601 | 100 | 7.7898 | 96.2 |
| Example 6 | 1.2599 | 100 | 7.4829 | 92.4 |
| Example 7 | 1.2588 | 100 | 7.4592 | 92.1 |
| Example 8 | 1.2198 | 100 | 7.412 | 91.5 |
| Example 9 | 1.2551 | 100 | 7.4679 | 92.2 |
| Example 10 | 1.2609 | 100 | 7.4846 | 92.4 |

**[Table 9]**

| | Graphite | | Li₂CO₃ | |
|---|---|---|---|---|
| | Weight (g) | Recovery | Weight (g) | Recovery |
| | | rate (%) | | rate (%) |
| Example 5 | 3.5791 | 100 | 1.642 | 66.21 |
| Example 6 | 3.9501 | 100 | 1.5218 | 61.36 |
| Example 7 | 3.9358 | 100 | 1.6624 | 67.03 |
| Example 8 | 3.9283 | 100 | 1.1049 | 44.55 |
| Example 9 | 3.9654 | 100 | 1.244 | 50.16 |
| Example 10 | 3.9498 | 100 | 1.2966 | 52.28 |

Comparing Examples 5 to 10, it was confirmed that the recovery rate of the Li compound was the highest in the case of the LeS solution using IPA among the range of anti-solvents.

In addition, an ICP analysis was performed on the Li powder recovered in Example 5 above, and the results of the ICP analysis are summarized in Table 10 below.

**[Table 10]**

| | **mg/kg** | **MW** | **MW %** |
|---|---|---|---|
| **Li** | 187347 | 26991.35 | 99.8 |
| **Mg** | 13.4 | 0.551 | 0.002 |
| **Al** | 10 | 0.370 | 0.001 |
| **Si** | 204 | 14.57 | 0.05 |
| **P** | 192 | 6.198 | 0.02 |
| **Ca** | 138 | 3.44 | 0.01 |
| **K** | 137 | 3.50 | 0.01 |
| **Cu** | 71.2 | 1.120 | 0.04 |
| **Co** | 2.29 | 0.0388 | 0.0001 |
| **Fe** | 85 | 1.522 | 0.005 |
| **Mn** | 3.19 | 0.058 | 0.0002 |
| **Ni** | 0 | 0 | 0 |

Although preferred examples of the present invention have been described in detail above, the scope of the present invention is not limited thereto, and various modifications and improvements made by those skilled in the art using the basic concept of the present invention defined in the following claims also fall within the scope of the present invention.

## Claims

1. A method of recovering battery materials, comprising the steps of:
1) charging a used battery;
2) inducing chemical discharge by disassembling the external pouch of the charged used battery in a solution;
3) separating the negative electrode substrate and separator from the solution after the chemical discharge is completed; and
4) recovering battery materials from the solution.

2. The method of recovering battery materials according to claim 1, wherein in step 1) above, the used battery is charged to a SOC (State of Charge) of 50 or higher.

3. The method of recovering battery materials according to claim 1, wherein in step 2) above, the solution dissolves lithium in the charged negative electrode.

4. The method of recovering battery materials according to claim 3, wherein in step 2) above, the solution uses water as a solvent or is an LeS (lithium-extraction solution).

5. The method of recovering battery materials according to claim 1, wherein in step 2) above, the chemical discharge is to supply the solution to the interior of the used battery and induce a spontaneous reaction between the lithium in the negative electrode and the solution.

6. The method of recovering battery materials according to claim 4, wherein the LeS contains water, which is a solvent that reacts with the charged negative electrode material to release lithium ions into the solution, and an anti-solvent that has low solubility to lithium compounds (lithium hydroxide anhydrate, lithium hydroxide monohydrate, lithium carbonate, etc.) and crystallizes lithium ions in the solution into lithium compounds.

7. The method of recovering battery materials according to claim 6, wherein the anti-solvent comprises at least one selected from the group consisting of methanol, ethanol, 2-propanol(isopropyl alcohol) (IPA), acetone, N-methyl-2-pyrrolidone (NMP), dimethyl sulfoxide (DMSO), ethylene glycol, propylene glycol, methyl acetate, ethyl acetate, pentane and heptane.

8. The method of recovering battery materials according to claim 1, wherein in step 4) above, battery materials recovered from the solution are any one of graphite, lithium (Li), copper foil, separator, and positive electrode material.

9. The method of recovering battery materials according to claim 8, wherein the lithium (Li) is in the form of one or more lithium compounds selected from the group consisting of Li₂CO₃, LiOH and LiOH·H₂O.

10. The method of recovering battery materials according to claim 8, wherein the lithium compound recovered from the solution is recovered by adding an alcohol-containing solvent to the lithium aqueous solution.
